# EUROPEAN PATENT SPECIFICATION

(11) **EP 1 152 277 B1**
(45) Date of publication and mention of the grant of the patent: **05.11.2008**
(21) Application number: 00309140.2
(22) Date of filing: 17.10.2000
(51) Int. Cl.: G02B 26/08, B81B 5/00

(54) **Micro-mirror device for image display apparatus**
Mikrospiegelvorrichtung für ein Bildanzeigesystem
Dispositif à micromiroirs pour un appareil d'affichage d'images

(30) Priority: 01.05.2000 KR 2000023270
(43) Date of publication of application: 07.11.2001
(73) Proprietor: SAMSUNG ELECTRONICS CO., LTD., Suwon-City, Kyungki-do (KR)
(72) Inventor: Shin, Jong-woo, 103-201 Dongseong Apt., Suwon-city, Kyungki-do (KR); Kweon, Soon-cheol, 4-1405 Ssangyong Apt., Seoul (KR); Shin, Hyung-jae, 125-703 Sibeom Hanshin Apt., Seongnam-city, Kyungki-do (KR)
(74) Representative: Robinson, Ian Michael

(56) References cited:
- EP-A- 0 563 546
- EP-A- 0 664 470
- EP-A- 0 769 713
- EP-A- 0 949 527

## Description

The present invention relates to a micro-mirror device for an image display apparatus which can change the traveling path of incident light by pivoting a mirror that is installed to correspond to each pixel, and more particularly, to a micro-mirror device for an image display apparatus which can increase optical efficiency by pivoting a mirror in the direction of the sides of the mirror.

General micro-mirror devices for an image display apparatus include a plurality of mirrors that are installed to be driven by an electrostatic force to reflect incident light at a predetermined angle. These micro-mirror devices are applied to image display devices of projection televisions, and optical scanning devices such as scanners, photocopying machines, and facsimiles. In particular, when these micro-mirror devices are used in image display devices, the number of mirrors equals the number of pixels arranged two-dimensionally, and each of the mirrors is driven in response to the image signal for a corresponding pixel, and thus reflected lights have different traveling paths. In this way, a picture is formed.

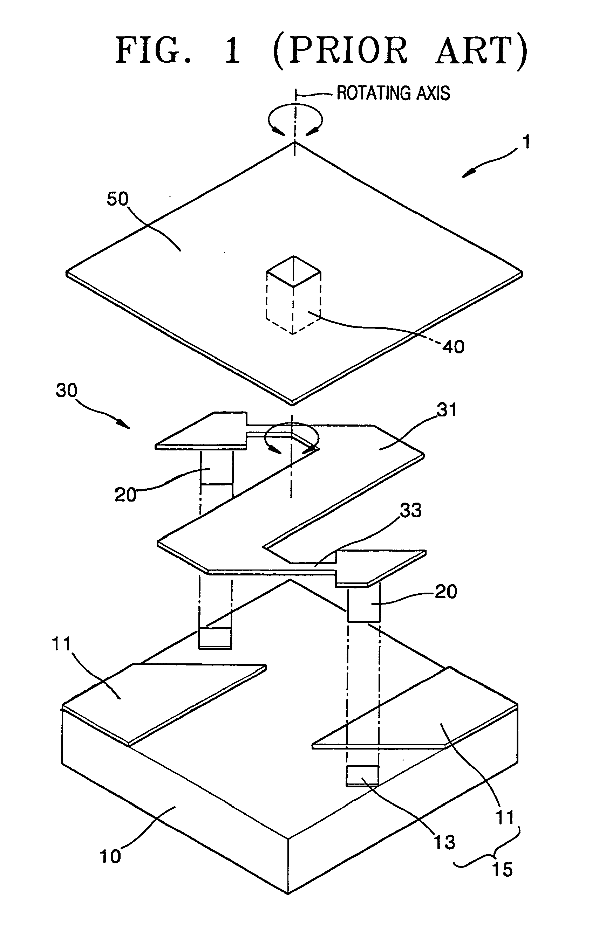

Referring to Figure 1, a conventional micro-mirror device 1 for an image display apparatus includes a substrate 10, a pair of first posts 20 formed on the substrate 10, an electrode 15 formed on the substrate 10, a girder 30, a second post 40 which protrudes from the girder 30, and a mirror 50 which is supported by the second post 40 and changes the reflection angle of incident light upon its upper surface according to the inclination angle determined by electrostatic attraction. The pair of first posts 20 protrude vertically from the substrate 10 a predetermined amount, isolated a predetermined distance apart from each other, and support the girder 30. The electrode 15 includes a pair of base electrodes 11 installed on the substrate 10, being isolated a predetermined distance apart from each other, and connection electrodes 13 which are formed on the substrate 10 so as to contact one end of each of the first posts 20, and apply current to the mirror 50. The girder 30 is supported by the pair of first posts 20, and pivoted on portions supported by the pair of first posts 20. The girder 30 is made up of a horizontal supporter 31 for supporting the second posts 40, and a pair of springs 33 that connect the pair of first posts 20 to both ends of the horizontal supporter 31, respectively. The pair of springs 33, which are elastically deformed by mutual electrostatic attraction between the mirror 50 and the base electrode 11, are rotated in opposite directions as electrostatic attraction is created. Thus, the horizontal supporter 31 is pivoted, so that the mirror 50 is slanted vertically. In the micro-mirror device having such a structure, the base electrodes 11 are arranged on a diagonal line on the substrate 10, so that the mirror 50 pivots on a diagonal line which forms a 45° angle with respect to the horizontal direction of the mirror 50.

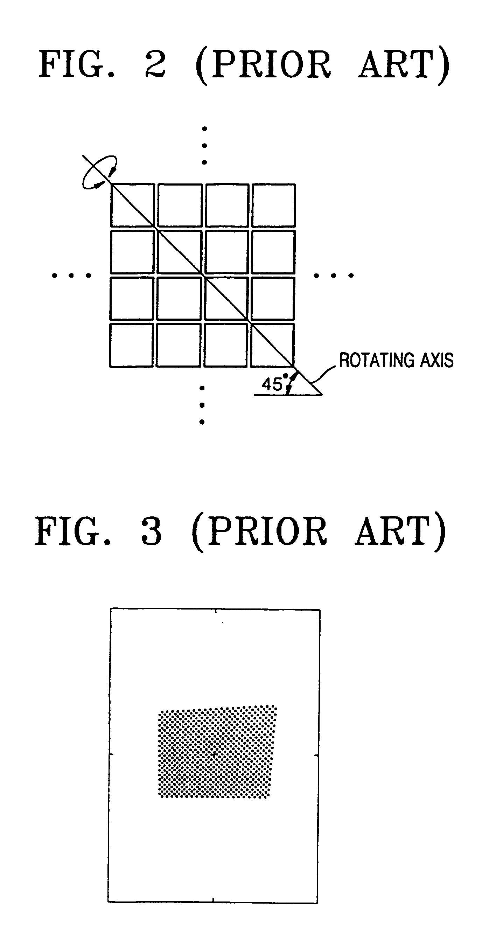

When the micro-mirror device having the above-described structure is adopted in an image display apparatus, a plurality of micro-mirror devices are arranged in a two-dimensional array structure, as shown in Figure 2. The micro-mirror devices arranged as described above are driven around the rotating axis which is positioned on a diagonal line. When the micro-mirror devices are driven on a diagonal line as a rotating axis, the shapes of the micro-mirror devices projected are as shown in Figure 3, when viewed from the side of a light source for emitting illuminating light to the micro-mirror devices 1. Figure 3 illustrates the shapes of micro-mirror devices projected, when light from the light source is converged at 10° angles and illuminated to the diagonally-driven micro-mirror devices 1 for an image display apparatus which pivot at ±10° angles, that is, which has a tilt angle of 20°. Compared to when there is no tilt and when parallel light beams are incident, the diagonally-driven micro-mirror device 1 has an optical efficiency of about 91% obtained by taking the product of the cosine of tilt angle and the square of the cosine of convergence angle, i.e., cos(tilt angle) x cos² (convergence angle) = cos 20° x cos² 10°. Thus, an optical loss of about 9% is generated.

EP-A-0,664,470 discloses multi-level digital micro-mirror device. The digital micro-mirror device comprises hinges attached to a yoke which limits the rotation of a device mirror. The mirror is supported by a center support post attached to two torsion hinges by a landing hinge yoke. The end of the torsion hinges are attached to two support posts which hold the hinges above a substrate and allows the hinges to twist in a torsional fashion.

EP-A-0949527, EP-A-0563546 and EP-A-0769713 disclose related prior art.

With a view to solve or reduce the above problem, it is an aim of embodiments of the present invention to provide a micro-mirror device for an image display apparatus having an improved structure where a mirror is pivoted in the direction of its sides.

According to the present invention there is provided an apparatus and method as set forth in the appended claims. Preferred features of the invention will be apparent from the dependent claims, and the description which follows.

According to a first aspect of the present invention, there is provided a micro-mirror device for an image display apparatus, comprising: a substrate; a landing pad provided on the substrate; a pair of base electrodes provided on the substrate adjacent to opposing lengthwise sides of the landing pad; a pair of first posts protruding from the upper surface of the pad, isolated from each other by a predetermined interval; a girder which is supported by the pair of first posts and is pivotable toward/away from the respective base electrodes; a second post protruding from an upper surface of the girder; and a mirror which is supported by the second post, reflects incident light, and receives electrostatic power via the landing pad and the base electrodes; wherein the mirror is pivotable together with the girder toward/away from said opposing sides of the landing pad by the electrostatic attraction between the base electrodes and the mirror; and wherein a relationship between the first posts and the second post is such that the girder is allowed to contact with the landing pad when the mirror is driven, rather than one side of the mirror being contactable with one of the base electrodes; and wherein the girder further comprises landing tips protruding from opposite sides of the support plate in a direction corresponding to the direction of pivoting of the support plate, the landing tips being able to contact the landing pad during pivoting; characterized in that: the landing tips are formed to be thinner than the support plate so that their ends are elastically deformed when contacting the support plate.

For a better understanding of the invention, and to show how embodiments of the same may be carried into effect, reference will now be made, by way of example, to the accompanying diagrammatic drawings in which:
Figure 1 is an exploded perspective view of a conventional diagonally-driven micro-mirror device for an image display device;
Figure 2 is a plan view illustrating a part of a conventional micro-mirror device array;
Figure 3 is a plan view illustrating the shapes of micro-mirror devices viewed from a light source, when light is converged at 10° angles and illuminated to diagonally-driven micro-mirror devices for an image display apparatus which has a tilt angle of 20°;
Figure 4 is a front view of a micro-mirror device for an image display apparatus according to an embodiment of the present invention;
Figure 5 is an exploded perspective view of a micro-mirror device for an image display device according to an embodiment of the present invention;
Figure 6 is a view illustrating the operation of a micro-mirror device for an image display apparatus according to an embodiment of the present invention;
Figure 7 is a plan view illustrating a part of an array of side-driven micro-mirror devices for an image display apparatus according to an embodiment of the present invention; and
Figure 8 is a plan view illustrating the shapes of micro-mirror devices viewed from a light source, when light is converged at 10° angles and illuminated to side-driven micro-mirror devices for an image display apparatus which has a tilt angle of 20°.

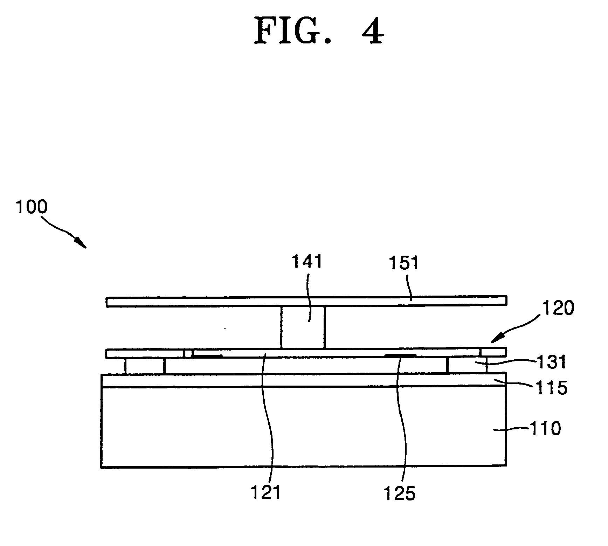

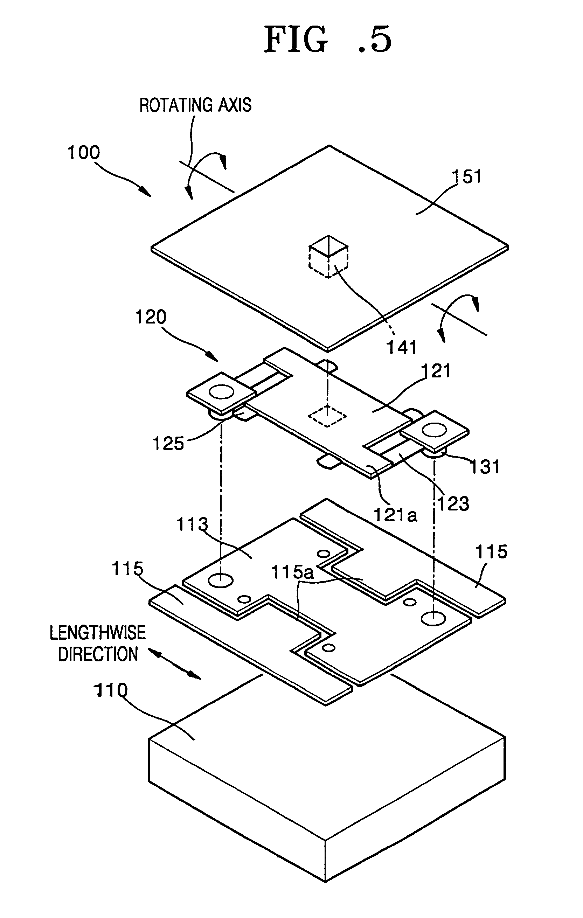

Referring to Figures 4 and 5, a micro-mirror device 100 according to an embodiment of the present invention includes a substrate 110, a landing pad 113 and a pair of base electrodes 115 provided on the substrate 110, a pair of first posts 131 protruding from the landing pad 113, a girder 120 installed so as to pivot toward the sides of the base electrodes 115, a second post 141 protruding from the girder 120, and a mirror 151 pivotably supported by the second post 141.

The pair of base electrodes 115 are separated a predetermined distance apart from each other on the substrate 110, with the landing pad 113 therebetween. The base electrodes 115 are formed to a predetermined length on opposite sides of the substrate 110, respectively, so that electrostatic attraction is exerted upon opposite sides of the mirror 151. The landing pad 113, on which the pair of first posts 131 are installed, also acts as an electrode for applying power to the mirror 151. Hence, electrostatic attraction is generated between the base electrodes 115 and the mirror 151 when power is applied to the base electrodes 115 and the landing pad 113. The generated electrostatic attraction rotates the mirror 151. Preferably, each of the base electrodes 115 has an inwardly-protruding portion 115a to increase the area that faces the mirror 151, so that the driving force due to electrostatic attraction is increased.

The pair of first posts 131 protrude vertically a predetermined amount from the landing pad 113, isolated from each other by a predetermined distance, and support the girder 120. The girder 120 is installed so as to pivot toward the sides of the landing pad 113 by electrostatic attraction, and its rotating axis is formed in a direction equal to the lengthwise direction of the base electrode 115.

The girder 120 includes a support plate 121 for supporting the second post 141, and a pair of springs 123 which connect the support plate 121 to the upper surface of each of the first posts 131 and pivotally support the support plate 121.

The support plate 121 has connecting portions 121a which protrude from the sides of the support plate in a direction parallel to the lengthwise direction of the base electrodes 115, the connecting portions being point symmetrical to each other with respect to the cross-section of a portion contacting the second post 141. Each of the pair of springs 123 connects the upper surface of each of the pair of first posts 131 to each of the pair of connecting portions 121a. These springs 123 receive opposite elasticities due to the electrostatic attraction between the mirror 151 and the base electrodes 115. Accordingly, when the mirror 151 is pivoted vertically by the electrostatic attraction, the pair of springs 123 are rotated in opposite directions. Also, when the direction of pivoting is changed, the directions of rotation moments applied to the springs 123 are also changed. As described above, each of the springs 123 receives both upward and downward elasticities, so that the elasticity coefficient of each of the springs 123 does not change.

Preferably, the girder 120 further includes landing tips 125 protruding from opposite sides of the support plate 121 in a direction corresponding to the direction of pivot of the support plate 121. The landing tips 125 are inclined so that contact with the landing pad 113 approximates point contact. Also, the landing tips 125 are formed to be thinner than the support plate 121 so that their ends are elastically deformed when contacting the support plate 121, thus achieving shock-absorption. Also, elastic energy is accumulated when the landing tips 125 are elastically deformed, and the accumulated elastic energy is changed into kinetic energy for the girder 120 and the mirror 151 when the mirror is restored to its original location by removal of the driving voltage. Consequently, adhesive contact of the mirror 151 with the base electrodes 115 is prevented, and thus contact of the girder 120 with the base electrodes 115 is smoothly removed.

The second post 141 protrudes a predetermined amount above the center of the support plate 121, and supports the center of the mirror 151. The inclination angle of the mirror 151 is determined depending on electrostatic attraction, which changes the reflection angle of light incident upon the upper surface of the mirror. Here, the height of each of the first posts 131 is lower than that of the second post 141. Accordingly, the girder 120 contacts the landing pad 113 instead that the sides of the mirror 151 contacting the base electrodes 115.

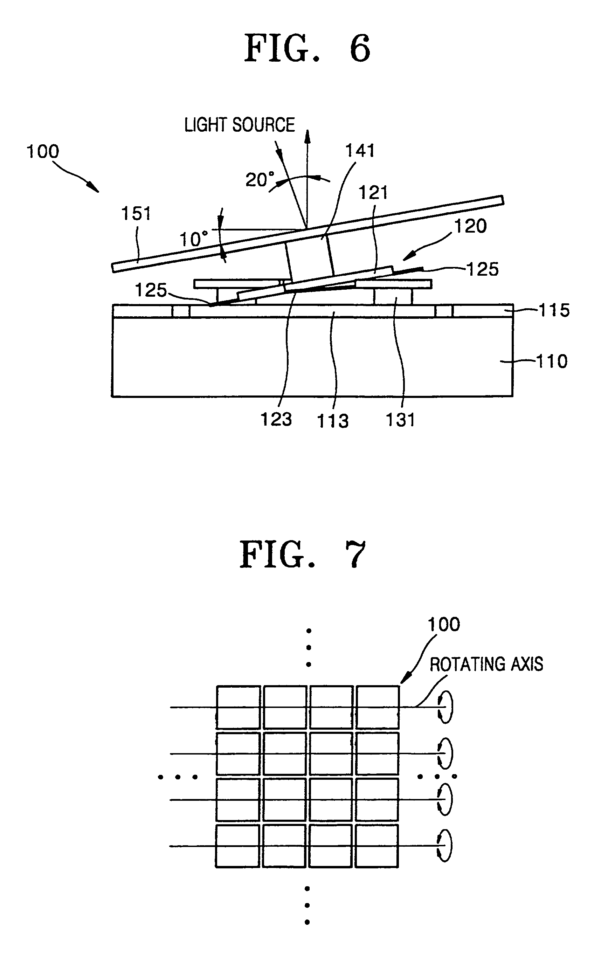

Referring to Figure 6, the micro-mirror device 100 according to an embodiment of the present invention having such a structure is pivoted in one direction by electrostatic attraction between the base electrodes 115 and the mirror 151 when a driving force is applied. The pivoting is stopped by contact of one landing tip 125 with the landing pad 113. In this case, light from a light source is incident upon the upper surface of the mirror 151, used as effective light, and proceeds toward a screen via a projection lens (not shown) in an image display apparatus. Conversely, the pivot direction of the mirror 151 can be changed by changing the driving force. In this case, light radiated onto and reflected by the upper surface of the mirror 151 proceeds in a different path, thus being rendered ineffective.

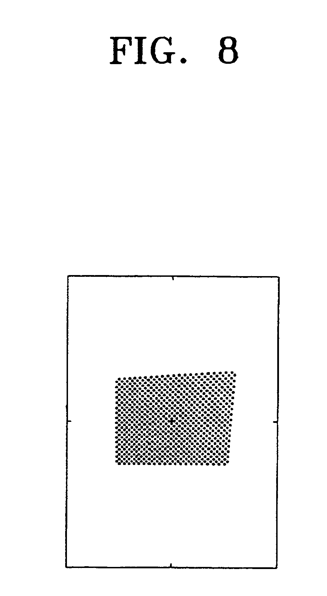

When the micro-mirror device 100 is adopted in an image display apparatus, a plurality of micro-mirror devices are arrayed in a two-dimensional structure, as shown in Figure 7. The micro-mirror devices 100 arrayed as described above are driven on its side on the basis of the rotating axis. When the micro-mirror devices 100 are driven as described above, the shapes of the micro-mirror devices projected are as shown in Figure 8, when viewed from the perspective of a light source for radiating light to the micro-mirror devices 100. Here, the horizontal axis denotes the degree of defocusing, and the vertical axis denotes the upper surface.

Figure 8 illustrates the shapes of micro-mirror devices viewed from a light source, when light is converged at 10° angles and illuminated to side-driven micro-mirror devices for an image display apparatus which has a pivot angle of ±10°, that is, a tilt angle of 20°. In the case where the side-driven micro-mirror devices are adopted, an optical loss can be reduced by controlling the area ratio of a micro-mirror device array and the ratio of the horizontal power to the vertical power of light from a light source, leading to high optical efficiency of about 98% or greater.

In the micro-mirror device for an image display apparatus having the structure described above, pivoting of the mirror using the rotation moment of a girder determines the traveling path of light, so that the optical arrangement of an optical system such as a projection lens is made easily. Also, the sideward driving of micro-mirror devices enables the control of the area ratio of a micro-mirror device array and the horizontal/vertical power ratio of radiated light. Therefore, high optical efficiency of about 98% or more is obtained.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

## Claims

1. A micro-mirror device for an image display apparatus, comprising:
a substrate (110);
a landing pad (113) provided on the substrate (110);
a pair of base electrodes (115) provided on the substrate adjacent to opposing lengthwise sides of the landing pad (113);
a pair of first posts (131) protruding from the upper surface of the pad (113), isolated from each other by a predetermined interval;
a girder (120) which is supported by the pair of first posts (131) and is pivotable toward/away from the respective base electrodes (115);
a second post (141) protruding from an upper surface of the girder (120); and
a mirror (151) which is supported by the second post (141), reflects incident light, and receives electrostatic power via the landing pad (113) and the base electrodes (115);
wherein the mirror (151) is pivotable together with the girder (120) toward/away from said opposing sides of the landing pad (113) by the electrostatic attraction between the base electrodes (115) and the mirror (151); and
wherein a relationship between the first posts (131) and the second post (141) is such that the girder (120) is allowed to contact with the landing pad (113) when the mirror (151) is driven, rather than one side of the mirror (151) being contactable with one of the base electrodes (115); and
wherein the girder (120) further comprises landing tips (125) protruding from opposite sides of the support plate (121) in a direction corresponding to the direction of pivoting of the support plate (121), the landing tips (125) being able to contact the landing pad (113) during pivoting;
**characterized in that**:
the landing tips (125) are formed to be thinner than the support plate (121) so that their ends are elastically deformed when contacting the support plate (121).

2. The micro-mirror device for an image display apparatus of claim 1, wherein the girder (120) is installed so as to pivot toward the opposing sides of the landing pad (113), and its rotating axis is formed in a direction parallel to the opposing sides of the substrate (110).

3. The device of claim 1, wherein the first posts (131) are shorter than the second post (141).

4. The micro-mirror device for an image display apparatus of any preceding claim, wherein the girder (120) comprises:
a support plate (121) for supporting the second post (141), the support plate (121) having connecting portions (121a) which protrude from the sides of the support plate (121) in a direction parallel to the lengthwise direction of the base electrodes (115) and are point-symmetrical to each other on the basis of the second post (141); and
a pair of springs (123) which connect an upper surface of each of the first posts (131) to each of the connecting portions (121a), and are elastically deformed in opposite directions by electrostatic attraction between the mirror (151) and the base electrodes (115),
wherein the pair of springs (123) are rotated in opposing directions when the mirror (151) is vertically inclined by electrostatic attraction.

5. The micro-mirror device for an image display apparatus of any preceding claim, wherein each of the pair of base electrodes (115) has a protruding portion (115a) protruding inward toward the landing pad (113) to widen the area that faces the girder (120).

## Patentansprüche

1. Mikrospiegelvorrichtung für ein Bildanzeigesystem, mit:
einem Substrat (110);
einem auf dem Substrat (110) vorgesehenen Podestfeld (113) ;
einem neben gegenüberliegenden längsgerichteten Seiten des Podestfelds (113) auf dem Substrat vorgesehenen Paar Basiselektroden (115);
einem von der oberen Fläche des Felds (113) hervorstehenden Paar erster Pfosten (131), die durch ein vorbestimmtes Intervall voneinander getrennt sind;
einem Balken (120), der von dem Paar erster Pfosten (131) gestützt wird und zu den jeweiligen Basiselektroden (115) hin bzw. von ihnen weg schwenkbar ist;
einem von einer oberen Fläche des Balkens (120) hervorstehenden zweiten Pfosten (141); und
einem Spiegel (151), der von dem zweiten Pfosten (141) gestützt wird, einfallendes Licht reflektiert und über das Podestfeld (113) und die Basiselektroden (115) elektrostatische Energie empfängt;
wobei der Spiegel (151) zusammen mit dem Balken (120) durch die elektrostatische Anziehung zwischen den Basiselektroden (115) und dem Spiegel (151) zu den gegenüberliegenden Seiten des Podestfelds (113) hin bzw. von ihnen weg schwenkbar ist; und
wobei eine Beziehung zwischen den ersten Pfosten (131) und dem zweiten Pfosten (141) derart ist, dass, anstatt dass eine Seite des Spiegels (151) mit einer der Basiselektroden (115) kontaktierbar ist, der Balken (120) mit dem Podestfeld (113) in Kontakt treten darf, wenn der Spiegel (151) angetrieben wird; und
wobei der Balken (120) ferner Podestspitzen (125) umfasst, die aus gegenüberliegenden Seiten einer Stützplatte (121) in einer der Schwenkrichtung der Stützplatte (121) entsprechenden Richtung hervorstehen, wobei die Podestspitzen (125) das Podestfeld (113) während des Schwenkens kontaktieren können;
**dadurch gekennzeichnet, dass**:
die Podestspitzen (125) so ausgebildet sind, dass sie dünner als die Stützplatte (121) sind, so dass ihre Enden beim Kontaktieren der Stützplatte (121) elastisch deformiert werden.

2. Mikrospiegelvorrichtung für ein Bildanzeigesystem nach Anspruch 1, wobei der Balken (120) so eingebaut ist, dass er in Richtung der gegenüberliegenden Seiten des Podestfelds (113) schwenkt, und seine Drehachse ist in einer zu den gegenüberliegenden Seiten des Substrats (110) parallelen Richtung ausgebildet.

3. Vorrichtung nach Anspruch 1, wobei die ersten Pfosten (131) kürzer als der zweite Pfosten (141) sind.

4. Mikrospiegelvorrichtung für ein Bildanzeigesystem nach einem der vorstehenden Ansprüche, wobei der Balken (120) Folgendes umfasst:
eine Stützplatte (121) zum Stützen des zweiten Pfostens (141), wobei die Stützplatte (121) Verbindungsteile (121a) aufweist, die von den Seiten der Stützplatte (121) in einer zu der Längsrichtung der Basiselektroden (115) parallelen Richtung hervorstehen und miteinander punktsymmetrisch auf der Basis des zweiten Pfostens (141) sind; und
ein Paar Federn (123), die eine obere Fläche jedes der ersten Pfosten (131) mit jedem der Verbindungsteile (121a) verbinden und durch elektrostatische Anziehung zwischen dem Spiegel (151) und den Basiselektroden (115) in gegenüberliegenden Richtungen elastisch deformiert werden,
wobei das Paar Federn (123) in gegenüberliegenden Richtungen gedreht wird, wenn der Spiegel (151) durch elektrostatische Anziehung vertikal geneigt ist.

5. Mikrospiegelvorrichtung für ein Bildanzeigesystem nach einem der vorstehenden Ansprüche, wobei jeder des Paars Basiselektroden (115) einen hervorstehenden Teil (115a) aufweist, der nach innen in Richtung des Podestfelds (113) hervorsteht, um den dem Balken (120) zugewandten Bereich zu verbreitern.

## Revendications

1. Dispositif à micromiroir pour un appareil d'affichage d'images, comprenant :
un substrat (110) ;
une plate-forme de pose (113) placée sur le substrat (110) ;
une paire d'électrodes de base (115) placées sur le substrat en position adjacente à des côtés longitudinaux opposés de la plate-forme de pose (113) ;
une paire de premiers plots (131) faisant saillie de la surface supérieure de la plate-forme de pose (113) isolés entre eux par un intervalle prédéterminé ;
un support (120) soutenu par la paire de premiers plots (131) et susceptible de pivoter en direction / à l'écart des électrodes de base (115) respectives ;
un deuxième plot (141) faisant saillie d'une surface supérieure du support (120) ; et
un miroir (151) soutenu par le deuxième plot (141), réfléchissant la lumière incidente et recevant de l'énergie électrostatique par le biais de la plate-forme de pose (113) et des électrodes de base (115) ;
le miroir (151) étant susceptible de pivoter conjointement avec le support (120) en direction / à l'écart desdits côtés opposés de la plate-forme de pose (113) sous l'effet de l'attraction électrostatique entre les électrodes de base (115) et le miroir (151) ; et
les premiers plots (131) et le deuxième plot (141) étant liés par une relation telle que le support (120) est libre de venir au contact de la plate-forme de pose (113) lorsque le miroir (151) est actionné, au lieu qu'un côté du miroir (151) soit susceptible de venir au contact d'une des électrodes de base (115) ; et
le support (120) comprenant en outre des pattes de pose (125) faisant saillie de côtés opposés d'une plaque de soutien (121) dans une direction correspondant à la direction de pivotement de la plaque de soutien (121), les pattes de pose (125) étant capables de venir au contact de la plate-forme de pose (113) au cours du pivotement ;
le dispositif à micromiroir étant **caractérisé en ce que** :
les pattes de pose (125) sont usinées plus minces que la plaque de soutien (121) de façon à ce que leurs extrémités subissent une déformation élastique lorsqu'elles viennent au contact de la plaque de soutien (121).

2. Dispositif à micromiroir pour un appareil d'affichage d'images selon la revendication 1, le support (120) étant monté de manière à pivoter en direction des côtés opposés de la plate-forme de pose (113), et son axe de rotation étant formé dans une direction parallèle aux côtés opposés du substrat (110).

3. Dispositif à micromiroir pour un appareil d'affichage d'images selon la revendication 1, les premiers plots (131) étant plus courts que le deuxième plot (141).

4. Dispositif à micromiroir pour un appareil d'affichage d'images selon l'une quelconque des revendications précédentes, le support (120) comprenant :
une plaque de soutien (121) conçue pour soutenir le deuxième plot (141), la plaque de soutien (121) comportant des parties de jonction (121a) qui font saillie des côtés de la plaque de soutien (121) dans une direction parallèle à la direction longitudinale des électrodes de base (115) et qui présentent une symétrie ponctuelle mutuelle par rapport au deuxième plot (141) ; et
une paire de ressorts (123) qui joignent une surface supérieure de chacun des premiers plots (131) à chacune des parties de jonction (121a) et qui subissent une déformation élastique dans des directions opposées sous l'effet de l'attraction électrostatique entre le miroir (151) et les électrodes de base (115),
la paire de ressorts (123) subissant une rotation dans des directions opposées lorsque le miroir (151) subit une inclinaison verticale sous l'effet de l'attraction électrostatique.

5. Dispositif à micromiroir pour un appareil d'affichage d'images selon l'une quelconque des revendications précédentes, chacune de la paire d'électrodes de base (115) comportant une partie saillante (115a) faisant saillie vers l'intérieur en direction de la plate-forme de pose (113) de façon à élargir la surface en regard du support (120).
